# FASCICULE DE BREVET EUROPEEN

(11) **EP 3 673 125 B1**
(45) Date de publication et mention de la délivrance du brevet: **01.12.2021**
(21) Numéro de dépôt: 18762240.2
(22) Date de dépôt: 21.08.2018
(51) Int. Cl.: E04H 1/12, F24F 13/00, F24F 5/00, E04H 15/00

(54) **DISPOSITIF RAFRAÎCHISSANT ÉPHÉMÈRE**
KURZZEITIGE KÜHLVORRICHTUNG
EPHEMERAL COOLING DEVICE

(30) Priorité: 21.08.2017 FR 1757766; 22.12.2017 FR 1763058
(43) Date de publication de la demande: 01.07.2020
(73) Titulaire: Climespace, 75012 Paris (FR)
(72) Inventeur: BOUCAUD, Maxime, 75020 Paris (FR); DARDET, Vincent, 75017 Paris (FR); TURC, Olivier, 75012 Paris (FR)
(74) Mandataire: Cornuejols, Georges
(86) Numéro de dépôt international: PCT/EP2018/072517
(87) Numéro de publication internationale: WO 2019/038263

(56) Documents cités:
- EP-A1- 2 810 823
- WO-A1-2014/205462
- DE-A1- 3 439 559
- DE-U1-202006 006 988
- DE-U1-202007 012 724

## Description

### DOMAINE TECHNIQUE DE L'INVENTION

La présente invention vise un dispositif rafraîchissant éphémère. Elle s'applique, notamment, au domaine de l'aménagement extérieur et du rafraîchissement de l'air en environnement extérieur.

### ÉTAT DE LA TECHNIQUE

De fortes chaleurs peuvent rendre les déplacements en extérieur désagréable, et ce particulièrement en milieu urbain au niveau d'ilots de chaleur. Pour certaines personnes fragiles, pour des raisons d'âge ou des raisons médicales, des températures trop élevées interdisent ou limitent fortement la capacité à se déplacer en extérieur.

Ainsi, lors d'épisodes caniculaires, certains espaces urbains ou périurbains sont désertés par la population préférant se cantonner à des espaces plus frais.

Aujourd'hui, en matière de rafraichissement, on connaît les dispositifs à eau, telles les fontaines et les brumisateurs. Toutefois, ces dispositifs présentent une efficacité limitée et ne permettent pas de revitaliser un espace urbain. Un tel dispositif rafraîchissant éphémère sont connus, par exemple, des DE202006006988U1, WO2014/205462A1, DE3439559A1, EP2810823A1 et DE202007012724U1.

### OBJET DE L'INVENTION

La présente invention vise à remédier à tout ou partie de ces inconvénients.

À cet effet, la présente invention vise un dispositif rafraîchissant éphémère selon la revendication 1, qui comporte :
- une structure comportant un support et un pied soutenant le support et
- un système de rafraîchissement de l'air à proximité de la structure comportant une prise de raccordement à une entrée de fourniture en fluide.

Grâce à ces dispositions, l'air aux alentours de la structure peut être rafraîchi, ce qui améliore les conditions de vie des habitants d'aires urbaines par exemple.

Le dispositif objet de la présente invention comporte au moins une assise positionnée à proximité du pied, au moins une dite assise comportant le système de rafraîchissement de l'air à proximité de la structure, ladite assise agissant comme échangeur thermique par conduction, rayonnement ou convection par exemple entre le fluide et l'air ambiant.

Ces modes de réalisation permettent de rafraîchir un utilisateur assis sur chaque dite assise et donc de proposer un rafraîchissement au plus proche de l'utilisateur.

Selon l'invention au moins une assise entoure au moins partiellement le pied.

Ces modes de réalisation maximisent l'ombre reçue par des utilisateurs assis sur chaque dite assise.

Selon l'invention le dispositif objet de la présente invention comporte au moins une conduite de transport du fluide dans au moins deux assises.

Selon l'invention le dispositif objet de la présente invention comporte deux assises les conduites de transport d'au moins deux assises étant connectées l'une à l'autre.

Ces modes de réalisation confèrent au dispositif un caractère modulaire.

Selon l'invention le dispositif objet de la présente invention comporte un connecteur comportant une conduite de transport connectée à une conduite de transport d'au moins une assise.

Selon l'invention le pied comporte une conduite de transport de fluide vers le support.

Selon l'invention la conduite de transport du pied et la conduite de transport d'au moins deux assise sont reliées.

Selon l'invention le dispositif objet de la présente invention comporte un moyen de diffusion du fluide au niveau du support.

Selon l'invention le dispositif objet de la présente invention comporte un débitmètre du fluide diffusé au niveau du support, l'actionnement de la prise de fourniture de fluide étant réalisé en fonction du débit de fluide diffusé mesuré par le débitmètre.

Dans des modes de réalisation, la structure délimite un espace intérieur et un espace extérieur, ladite structure comportant une ouverture configurée pour permettre le passage d'un utilisateur entre l'espace intérieur et l'espace extérieur.

Ces dispositions permettent de :
- proposer des lieux de rafraichissement indispensables en période de forte chaleur pour des raisons de santé publique,
- améliorer la qualité de rafraichissement,
- s'adresser à une plus large partie de la population et à un plus grand nombre que les solutions actuelles,
- intégrer le dispositif à n'importe quels types de lieux,
- proposer une offre de services attractifs, ces lieux pouvant être pensés en zones de détente, coworking, zone wifi, d'expositions temporaires,
- être un nouveau lieu de vie, le dispositif permettant de repenser les quartiers en période de forte chaleur et de favoriser la création de lien social et
- avoir un impact positif sur la qualité de l'air.

Dans des modes de réalisation, le système de rafraîchissement comporte un brumisateur du fluide.

Ces modes de réalisation permettent de refroidir l'air par la diffusion de gouttelettes d'eau, par exemple.

Dans des modes de réalisation, le système de rafraîchissement comporte un échangeur thermique entre l'air et du fluide traversant un circuit fermé de circulation du fluide.

Ces modes de réalisation permettent d'éviter les pertes de fluide rafraîchissant. Le rafraîchissement est alors provoqué par le flux d'air naturel au lieu d'implantation du dispositif ou un flux d'air forcé par un système de ventilation électrique.

Dans des modes de réalisation, le circuit fermé comporte une pluralité de tronçons, chaque tronçon étant fixé à un élément de la structure, deux tronçons étant solidarisés entre eux par une liaison amovible ou non.

Dans des modes de réalisation, le circuit fermé est intégré à l'intérieur d'au moins un élément de structure, l'échangeur thermique étant formé d'un dit élément de structure.

Ces modes de réalisation permettent de rendre invisible, pour un utilisateur, le circuit fermé.

Dans des modes de réalisation, le dispositif objet de la présente invention comporte un support pour végétaux.

Dans des modes de réalisation, le support pour végétaux est intégré à la structure. Dans des variantes, le support pour végétaux est intégré à une paroi de la structure. Dans des variantes, le support pour végétaux est intégré à un toit de la structure.

Dans des modes de réalisation, les végétaux supportés par le support sont des végétaux dépolluants.

Ces modes de réalisation permettent au dispositif de rendre l'air ambiant plus propre pour les utilisateurs.

Dans des modes de réalisation, les végétaux sont une mousse.

Dans des modes de réalisation, le dispositif objet de la présente invention comporte un périphérique :
- de transmission de données ou d'énergie électrique ou
- d'affichage d'informations.

Ces modes de réalisation permettent d'offrir aux utilisateurs des fonctionnalités techniques supplémentaires permettant, par exemple, de recharger leur téléphone portable ou de visionner des informations.

Dans des modes de réalisation, le dispositif objet de la présente invention comporte un panneau solaire fournissant de l'énergie électrique au périphérique.

Ces modes de réalisation permettent de rendre énergétiquement autonome le dispositif.

Dans des modes de réalisation, le dispositif objet de la présente invention comporte une colonne comportant le système de rafraîchissement et le panneau solaire, la colonne étant configurée pour être positionnée à l'intérieur de l'espace formé par la structure.

Dans des modes de réalisation, la colonne présente une forme tubulaire creuse, ladite colonne comportant une entrée d'aspiration d'air en partie basse, une sortie d'air en partie haute et un ventilateur déplaçant l'air depuis l'entrée d'aspiration vers la sortie d'air, le système de rafraîchissement étant positionné entre l'entrée d'aspiration et la sortie d'air.

Dans des modes de réalisation, le système de rafraîchissement est un système de rafraîchissement de biens de consommation.

Dans des modes de réalisation, l'entrée de fourniture en fluide est raccordée à un circuit de transport de froid urbain.

Dans des modes de réalisation, le système de rafraîchissement est horizontal ou vertical et met en œuvre un rafraichissement par rayonnement et/ou convection et/ou conduction.

Dans des modes de réalisation, le système de rafraîchissement est intégré à un plancher, à une paroi, à un support et/ou à une assise.

### BRÈVE DESCRIPTION DES FIGURES

D'autres avantages, buts et caractéristiques particulières de l'invention ressortiront de la description non limitative qui suit d'au moins un mode de réalisation particulier du dispositif et de la colonne objets de la présente invention, en regard des dessins annexés, dans lesquels :
- la figure 1 représente, schématiquement, un premier mode de réalisation particulier du dispositif objet de la présente invention,
- la figure 2 représente, schématiquement, un mode de réalisation particulier du moyen de rafraîchissement d'un dispositif objet de la présente invention,
- la figure 3 représente, schématiquement, un deuxième mode de réalisation particulier du dispositif objet de la présente invention,
- la figure 4 représente, schématiquement, un premier mode de réalisation particulier de la colonne objet de la présente invention,
- la figure 5 représente, schématiquement, un deuxième mode de réalisation particulier de la colonne objet de la présente invention,
- la figure 6 représente, schématiquement, un troisième mode de réalisation particulier du dispositif objet de la présente invention,
- la figure 7 représente, schématiquement, un quatrième mode de réalisation particulier du dispositif objet de la présente invention et
- la figure 8 représente, schématiquement, un cinquième mode de réalisation particulier du dispositif objet de la présente invention.

### DESCRIPTION D'EXEMPLES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

On entend, ci-après, le terme « végétaux » comme des organismes appartenant au règne végétal. On rappelle que le règne végétal est un assemblage polyphylétique d'organismes photosynthétiques et dont les cellules ont une paroi faite de cellulose. Ce groupe est formé de deux lignées, l'une d'algues, et la seconde de plantes terrestres, qui comprennent notamment les bryophytes (mousses et hépatiques), fougères (ptéridophytes), gymnospermes et angiospermes.

On appelle « dépolluant », un végétal capable d'absorber des composants nocifs pour l'homme et présents dans l'air ambiant. Parmi ces composants, on cite par exemple :
- l'ammoniac,
- les émissions de benzène,
- le formaldéhyde,
- le monoxyde de carbone,
- le dioxyde de carbone,
- le toluène,
- le xylène et le trichloréthylène.

A titre d'exemple, de tels végétaux sont :
- la plante araignée (Chlorophytum comosum) qui absorbe le monoxyde de carbone, le formaldéhyde, le toluène et le xylène,
- le lierre (Hedera helix) qui absorbe le formaldéhyde et le xylène et
- le philodendron (Philodendron scandens) qui absorbe le formaldéhyde et le trichloréthylène.

On note que dans des variantes de l'invention, les végétaux sont remplacés par des membres du règne des fungi.

On note que, dans des variantes, les végétaux supportés par le support 130 sont des végétaux dépolluants.

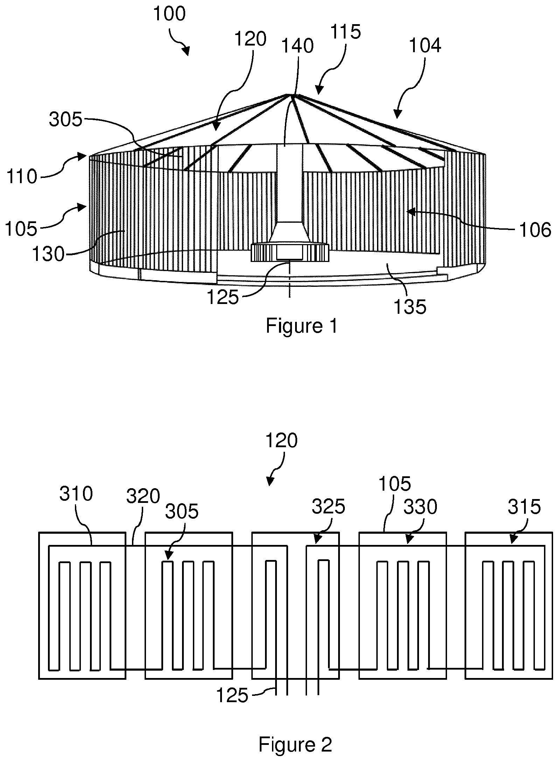

On observe, sur la figure 1, qui n'est pas à l'échelle, une vue schématique d'un premier mode de réalisation du dispositif 100 objet de la présente invention. Ce dispositif 100 rafraîchissant éphémère comporte :
- une structure 104 délimitant un espace intérieur et un espace extérieur, ladite structure comportant une ouverture 106 configurée pour permettre le passage d'un utilisateur et un support 130 pour végétaux et
- un système 120 de rafraîchissement de l'air à l'intérieur de la structure comportant une prise 125 de raccordement à une entrée de fourniture en fluide.

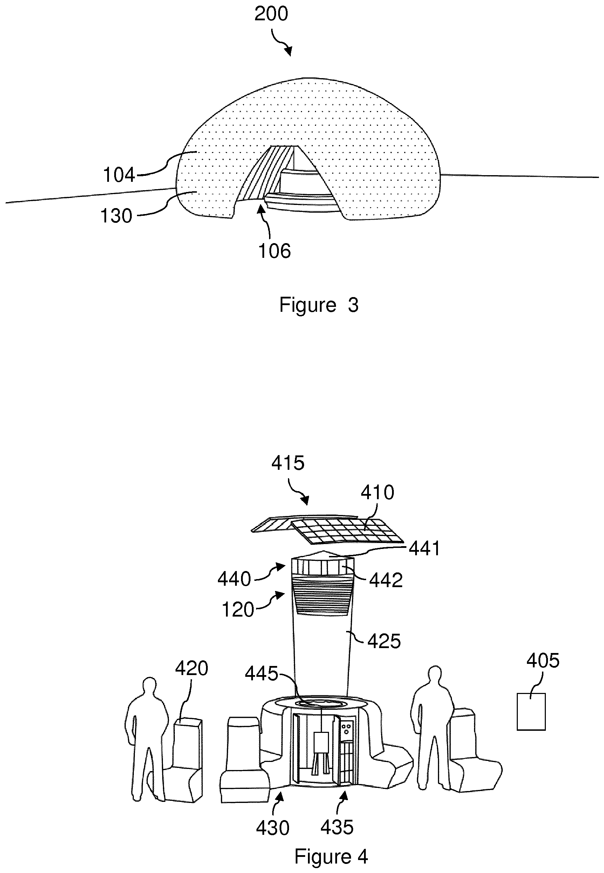

On note que la structure 104 est configurée pour ne nécessiter aucune fondation pour être mise en place et que le caractère éphémère du dispositif 100 provient du caractère aisément amovible de la structure 104. Ainsi, l'assemblage et le désassemblage de la structure 104 ne nécessitent aucuns travaux importants sur le sol sur lequel cette structure 104, avant l'assemblage ou après le désassemblage de la structure 104. En plus de ce caractère amovible, le caractère éphémère du dispositif peut être renforcé par une modularité importante de la structure telle que décrite en regard de la figure 3, permettant notamment un assemblage et un désassemblage facilité.

La structure 104 présente, par exemple, une partie supérieure agissant comme un toit et une partie latérale agissant comme un mur. On note que la forme de la structure 104 n'est pas limitative et qu'à titre d'exemple, cette forme peut correspondre à celle représentée en figure 1, en figure 3. Dans des variantes non représentées, la partie supérieure est plate et inclinée ou horizontale.

Dans la variante représentée en figure 1, la structure 104 présente une forme oblongue ou ellipsoïde. Cette forme est préférentiellement globalement convexe.

La structure 104 est réalisée, par exemple, en un grillage de tiges métalliques, plastiques ou en bois. La structure 104 peut être ajourée, transparente ou opaque. La structure 104 peut comporter un élément de structure au moins partiellement opaque, souple ou rigide, pour réduire l'intensité lumineuse de la lumière traversant l'élément de structure. Un tel élément de structure est, par exemple, un rideau ou une vitre teintée.

La structure 104 peut également comporter un moyen de fixation au sol tel, par exemple, un ensemble d'orifices destinés à être fixés à des cordages ou des tiges plantées dans le sol.

Dans des variantes, telles que représentées en figure 3, la structure 104 comporte :
- au moins une paroi 105 sensiblement verticale, dite « panneau », comportant un moyen 110 de fixation amovible à une paroi 115 sensiblement horizontale, dite « toit », au moins un panneau étant configuré pour être en appui sur le sol et
- le toit 115, fixé à au moins un panneau 105.

Chaque panneau 105 est, par exemple, une structure de forme sensiblement plane. Dans des variantes, au moins un panneau 105 présente une forme de section de surface de tube, de sorte que le dispositif 100 une fois assemblé présente une forme arrondie.

On appelle « vertical », un panneau dont l'angle du plan général dudit panneau par rapport au sol est supérieur à 60 degrés.

Préférentiellement, au moins un panneau 105 est conçu pour présenter un poids tel qu'il peut être soulevé à mains nues par un ou deux êtres humains moyens.

Chaque panneau 105 peut, indépendamment, comporter un élément de structure au moins partiellement opaque, souple ou rigide, pour réduire l'intensité lumineuse de la lumière traversant le panneau 105. Un tel élément de structure est, par exemple, un rideau ou une vitre teintée.

Chaque panneau 105, indépendamment, comporter un moyen de fixation amovible au sol. Un tel moyen de fixation amovible au sol est, par exemple, formé de l'association d'orifices formés dans la structure du panneau 105 de piquets enfoncés dans le sol à travers ces orifices.

Au moins un panneau 105 comporte un moyen 110 de fixation amovible au toit 115. Plusieurs types de moyens 110 de fixation sont envisageables.

Un premier type de moyen 110 de fixation consiste à ce que deux parties complémentaires d'un mécanisme de fixation quelconque soit réparties entre le panneau 105 et le toit 115 et que la fixation soit directe entre ces deux éléments. Le mécanisme de fixation ici peut être de tout type connu de l'homme du métier lorsqu'il s'agit de solidariser deux pièces mécaniques. Par exemple, un tel mécanisme de fixation est un mécanisme à base d'enclipsage d'une pièce dans une autre, un mécanisme de liaison d'œillets par une corde ou une chaine ou bien un système vis/filetages. En tout état de cause, le mécanisme de fixation doit être choisi de telle sorte que la fixation puisse être défaite sans entraîner la destruction des pièces constitutives du mécanisme, rendant le dispositif 100 réutilisable.

Un deuxième type de moyen 110 de fixation consiste à fixer indirectement le panneau 105 au toit 115. Une telle fixation indirecte consiste, par exemple, à fixer le panneau 105 à une paroi 135 sensiblement horizontale, dite « plancher », le plancher 135 étant fixé à un mat 140 central fixé au toit 115.

Dans des variantes, aucun panneau 105 n'est fixé au toit 115, le toit 115 et les panneaux 105 étant fixés à proximité les uns de l'autre de sorte à former un volume.

Le nombre de panneaux 105 de le dispositif 100 dépend de la disposition voulue pour le dispositif 100. Ce nombre peut, par exemple, être choisi pour que le dispositif 100 présente une, deux ou trois ouvertures susceptibles de laisser passer les utilisateurs.

Dans des variantes, un panneau 105 comporte une porte.

Le toit 115 est, par exemple, une structure de forme sensiblement convexe. Dans des variantes, le toit 115 présente une forme de section de surface de tube, de sorte que le dispositif 100 une fois assemblé présente un toit arrondi.

On appelle « horizontale » l'inclinaison globale du plan général formé par le toit 115 cette inclinaison étant inférieure à 30 degrés par rapport au plan général formé par le sol. Ce plan général est formé, par exemple, par l'ensemble des points de fixation du toit 115 aux panneaux 105. Alternativement, ce plan général est celui de la plus grande dimension du toit 115.

Le toit 115 peut être relié à un ou plusieurs mâts 140 selon la configuration du dispositif 100 désirée.

Dans des variantes, le toit 115 comporte également un support 130 pour végétaux.

Le support 130 pour végétaux est, par exemple, un bac pour plantes grimpantes positionné contre la structure 104. Dans des variantes, le support 130 comporte des accroches sur un élément de structure 104 permettant à un utilisateur d'y fixer des tiges de plantes.

Dans certaines variantes, le support 130 pour végétaux est fixé à un échangeur thermique 305 de refroidissement de l'air à proximité du panneau 105. Dans ces variantes, les végétaux peuvent grimper directement sur l'échangeur thermique 305.

Le système de rafraîchissement 120 de l'air implique le rafraîchissement de l'air grâce à un fluide. Ce fluide, qui peut être de l'eau ou de l'eau glacée par exemple, est fourni au dispositif grâce à une entrée (non représentée) de fourniture. Cette entrée de fourniture est reliée, par exemple, à un réseau de distribution d'eau ou d'eau glacée ou à un réservoir d'eau ou d'eau glacée.

Le système de rafraîchissement 120 comporte une prise 125 de raccordement à l'entrée de fourniture, cette prise 125 étant, par exemple, formée d'une connectique pour fluide compatible à l'entrée de fourniture. L'implémentation particulière de cette connectique dépend du type d'entrée de fourniture et représente, pour l'homme du métier, un choix trivial parmi un ensemble de connectiques connus adaptés au transport du fluide visé.

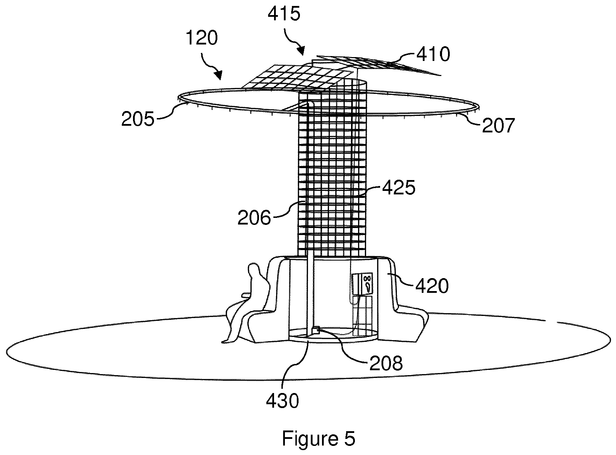

Dans des modes de réalisation particuliers, tels que ceux représenté en figure 5, le système 120 de rafraîchissement comporte un brumisateur 205 du fluide. Ce brumisateur 205 est préférentiellement fixé au toit 115, à une colonne de rafraîchissement ou à un panneau 105. Dans des variantes, le dispositif, comporte une pluralité de brumisateurs 205. Dans des variantes, le brumisateur 205 n'est pas rendu solidaire de la structure 104 du dispositif.

Chaque brumisateur 205 est, préférentiellement, positionné en hauteur de sorte à rafraîchir prioritairement la tête des utilisateurs.

Dans des modes de réalisation particuliers, tels que ceux représentés en figures 2 et 4, le système 120 de rafraîchissement comporte un échangeur 305 thermique entre l'air et du fluide traversant un circuit 310 fermé de circulation du fluide.

L'échangeur 305 thermique peut être fixé à un élément de structure du dispositif 100 formée des parois, 105, 115 et/ou 135, ou bien être rendu indépendant et simplement positionné à proximité d'un élément de structure du dispositif 100.

L'échangeur 305 thermique est, par exemple, un échangeur à plaques ou à ailettes ayant pour fluide chaud l'air environnant l'échangeur thermique 305 et pour fluide froid le fluide fourni par l'entrée de fourniture reliée au système 120 de rafraîchissement.

Dans des variantes, le système 120 de rafraîchissement comporte une pompe de circulation du fluide dans le circuit 310 fermé.

Dans des variantes, le système 120 de rafraîchissement comporte une pluralité d'échangeurs 305 thermiques. Chaque échangeur 305 thermique est alors relié à l'entrée de fourniture en fluide.

Dans des modes de réalisation préférentiels, tel que celui représenté en figure 2, le circuit 310 fermé comporte une pluralité de tronçons, 315, 325 et 330, chaque tronçon, 315, 325 et 330, étant fixé à un élément, 105 et 115, de la structure 104, deux tronçons étant solidarisés entre eux par une liaison 320 amovible ou non.

Dans des modes de réalisation préférentiels, tel que celui représenté en figure 2, le circuit 310 fermé est intégré à l'intérieur d'au moins un élément, 105 et 115, de structure, l'échangeur thermique 305 étant formé d'un dit élément de structure 104.

La liaison 320 est, par exemple, une connectique pour fluide permettant la liaison entre les deux tronçons 315 considérés. Le circuit fermé 310 peut ainsi être assemblé en même temps que du dispositif 100.

Dans des modes de réalisation préférentiels, tel que celui représenté en figure 2, le circuit 310 fermé est intégré à l'intérieur d'au moins un élément 105 de structure 104, l'échangeur thermique 305 étant formé d'un dit élément de structure.

Dans ces modes de réalisation, l'échangeur 305 thermique peut, comme illustré en figure 1, limiter le passage d'utilisateurs à travers le panneau 105.

L'échangeur thermique 305 peut également agir en tant que support 130 pour végétaux.

Dans des variantes, du dispositif 100 comporte une gouttière de récupération d'eau de pluie, cette eau de pluie pouvant être injectée dans le système 120 de refroidissement.

On observe, en figure 4, schématiquement, un mode de réalisation particulier du dispositif 400 objet de la présente invention. Ce dispositif 400 comporte un périphérique 405 :
- de transmission de données ou d'énergie électrique ou
- d'affichage d'informations.

Ce périphérique 405 est, par exemple, un écran, une borne Wi-Fi, une borne de recharge par USB (pour « Universal Serial Bus » ou bus de série universel), un ordinateur.

Dans des variantes, le dispositif 400 comporte une pluralité de périphériques 405.

Dans des modes de réalisation particulier, le dispositif 400 comporte un panneau 410 solaire fournissant de l'énergie électrique au périphérique 405.

Dans des modes de réalisation préférentiels, tels que ceux représentés en figures 4 et 5, le dispositif, 100 ou 200, comporte une colonne 415 comportant le système 120 de rafraîchissement, le panneau 410 solaire, la colonne étant configurée pour être positionnée à l'intérieur de l'espace formé par la structure 104.

Dans des variantes, la colonne 415 comporte au moins un support 420 d'assise pour utilisateur.

Chaque support 420 d'assise est, par exemple, formé d'une pluralité de meubles munis de dossiers présentant une surface sensiblement horizontale permettant l'assise d'un utilisateur. Cette pluralité de meubles est arrangée, par exemple, par positionnement des dossiers contre la vasque de soufflage de sorte à entourer ledit vasque.

Dans la variante de colonne 415 représentée en figure 4, la colonne 415 présente une forme tubulaire creuse, dite « vasque de soufflage », ladite colonne comportant une entrée 435 d'aspiration d'air en partie basse, une sortie 440 d'air en partie haute et un ventilateur 445 déplaçant l'air depuis l'entrée d'aspiration vers la sortie d'air, le système de rafraîchissement 120 étant positionné entre l'entrée d'aspiration et la sortie d'air.

La sortie 440 d'air comporte, préférentiellement, un réflecteur 441 d'air positionné sur le chemin du flux d'air traversant la vasque de soufflage de sorte à disperser ce flux d'air dans une pluralité de directions. Le flux d'air ainsi dispersé traverse, préférentiellement, une grille 442 de soufflage.

Dans des variantes, le panneau solaire 410 est configuré pour fournir en électricité le ventilateur 445 ou tout autre circuit électrique du dispositif.

Dans la variante de colonne 415 représentée en figure 5, la colonne 415 est formée d'une structure 425 ajourée traversée par une canalisation 206 d'eau potable sensiblement verticale. Cette canalisation 206 est connectée à une rampe de brumisation, sensiblement horizontale, munie de buses 207 de brumisation d'eau. L'eau est acheminée à travers la canalisation 206 par une pompe 208.

La colonne 415 comporte également un moyen 430 de fixation à l'intérieur du dispositif, 100 ou 200.

La colonne 415 peut être fixée par lestage ou grâce à un mécanisme de fixation au sol.

On observe également, en figures 4 et 5, de manière indépendante aux dispositifs représentés en figures 1 et 3, une colonne 415 de rafraîchissement pour former un dispositif, 100 ou 200, selon l'une des revendications 10 ou 11, qui comporte :
- un panneau solaire 410 supporté par un élément 425 de structure,
- un système de rafraîchissement 120 et
- un moyen 430 de fixation de ladite colonne à l'intérieur et un espace formé par une structure.

Dans des variantes, la colonne 415 comporte au moins un support 420 d'assise d'un utilisateur.

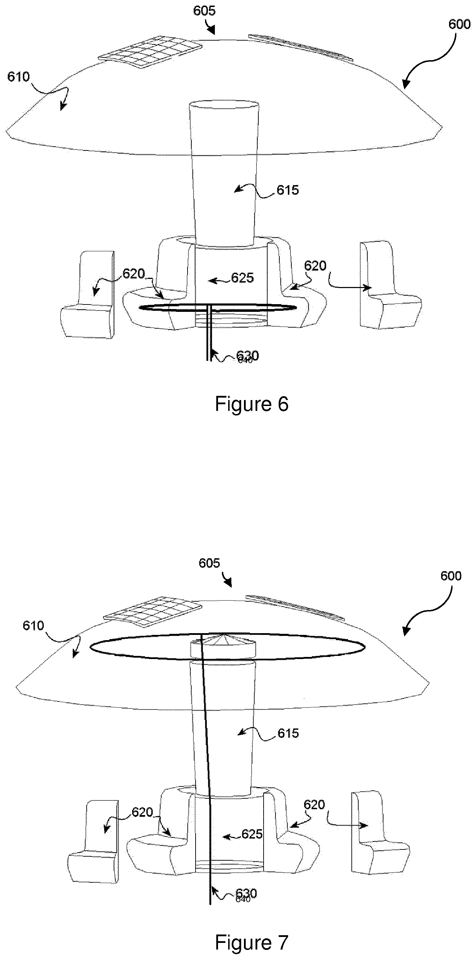

On observe, en figure 6 et 7, schématiquement, des modes de réalisation particulier du dispositif 600 objet de la présente invention. Ces dispositifs 600 rafraîchissant éphémères, comportent :
- une structure 605 comportant un support 610 et un pied 615 soutenant le support et
- au moins une assise 620 positionnée à proximité du pied, au moins une dite assise comportant un système 625 de rafraîchissement de l'air à proximité de la structure comportant une prise 630 de raccordement à une entrée de fourniture en fluide, ladite assise agissant comme échangeur thermique par conduction entre le fluide et l'air ambiant.

La structure 605 peut être de tout type décrit en regard des figures 1 à 5. Alternativement, la structure 605 n'est pas fermée et formée d'un support 610 essentiellement plan, horizontal ou incliné, monté sur un pied 615. La forme de cette structure 605 a peu d'importance pour peu que cette structure soit configurée pour permettre un ombrage pour des utilisateurs positionnés sous au moins une partie du support 610.

Le support 610 est, par exemple, un support pour végétaux, pour panneaux photovoltaïques, pour miroirs ou pour tout panneau au moins partiellement opaque. Le support 610 est choisi pour ombrager une surface positionnée sous ledit support.

Bien que les figures 6 et 7 représentent un pied 615 unique, la structure 605 peut comporter une pluralité de pieds 615. Ce pied 615 peut, par exemple, prendre la forme d'un arbre pour des raisons esthétiques, tel que représenté en figure 7.

Au moins une assise 620 est, par exemple, un banc. Le dispositif 600 peut comporter une pluralité d'assises selon la configuration désirée lors de l'installation du dispositif. Une assise est munie d'un système 625 de rafraichissement pouvant être de tout type décrit en regard des figures 1 à 5. Alternativement, et préférentiellement, au moins une assise 620 agit comme échangeur thermique entre un fluide froid circulant à l'intérieur de l'assise et l'air extérieur, voire le corps d'un utilisateur assis sur chaque dite assise 620.

Cet apport en fluide est réalisé via la prise 630 de raccordement à un réseau de fluide frigorifique, tel un réseau de fluide frigorifique urbain par exemple.

Selon l'invention au moins une assise 620 entoure au moins partiellement le pied 615.

Pour réaliser la fonction d'échangeur thermique, au moins une assise 620 peut comporter au moins une conduite 635 de transport du fluide dans chaque dite assise 620.

Selon l'invention, le dispositif 600 comporte au moins deux assises 620, les conduites 635 de transport d'au moins deux assises 620 étant connectées l'une à l'autre. Cette connexion est assurée, préférentiellement, par des connecteurs amovibles et modulaires.

Selon l'invention le dispositif 600 comporte un connecteur comportant une conduite 635 de transport connectée à une conduite 635 de transport d'au moins deux assises 620.

Ce connecteur présente, par exemple, la forme d'un bac de fleurs.

Selon l'invention le pied 615 comporte une conduite 640 de transport de fluide vers le support 610. Ce transport peut également être assuré par convection dû au gradient de température du fluide entre la prise 630 et le pied 615. Dans des variantes, le fluide est diffusé sous le support 610 par le biais de tout équipement de diffusion connu de l'homme du métier.

Selon l'invention la conduite 640 de transport du pied 615 et la conduite 635 de transport d'au moins deux assises 620 sont reliées.

Selon l'invention le dispositif 600 objet de la présente invention comporte un moyen 645 de diffusion du fluide au niveau du support 610.

Ce moyen 645 de diffusion est, par exemple, une buse ou un sprinkler.

Selon l'invention le dispositif 600 objet de la présente invention comporte un débitmètre 650 du fluide diffusé au niveau du support 610, l'actionnement de la prise 630 de fourniture de fluide étant réalisé en fonction du débit de fluide diffusé mesuré par le débitmètre.

Cette fonction permet de maintenir un volume de fluide constant à l'intérieur du circuit de refroidissement quelle que soit la quantité de fluide diffusée résultante de la convection du fluide à l'intérieur du circuit.

On note qu'il est possible de former un réseau de structures, non représenté, comportant :
- au moins un dispositif 600, au moins un desdits dispositifs 600 comportant un connecteur,
- au moins une structure 605 comportant un support 610 et un pied 615 soutenant le support et
- au moins une assise 620 positionnée à proximité du pied, chaque dite assise comportant une conduite 635 de transport de fluide froid connectée à un connecteur d'au moins un dispositif.

Il est possible de connecter plusieurs dispositifs 600 entre eux grâce à des connecteurs ou directement grâce à des assises 620. Ceci permet, notamment, que certaines structures ne soient pas directement connectées à un réseau de distribution de fluide froid mais bénéficient tout de même des frigories apportées par le réseau de structures.

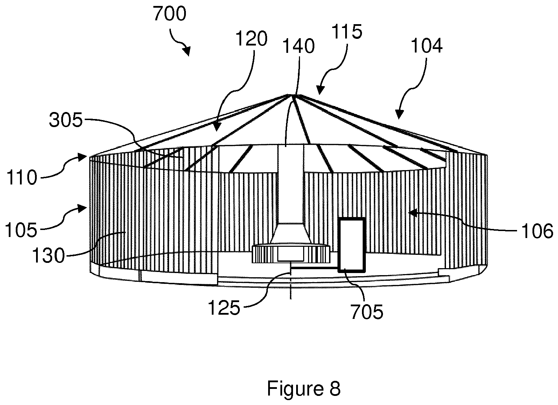

On observe, sur la figure 8, schématiquement, un mode de réalisation particulier du dispositif 700 objet de la présente invention. Dans ce mode de réalisation, le système 705 de rafraîchissement est un système de rafraîchissement de biens de consommation.

Un tel système est, par exemple, un réfrigérateur fourni en frigories par l'entrée de fourniture de fluide réfrigérant.

Dans des variantes d'un quelconque des modes de réalisation décrits, l'entrée de fourniture en fluide peut être raccordée à un circuit de transport de froid urbain.

Dans des variantes d'un quelconque des modes de réalisation décrits, le système de rafraîchissement est horizontal ou vertical et mettre en œuvre un rafraichissement par rayonnement et/ou convection et/ou conduction.

Dans des variantes d'un quelconque des modes de réalisation décrits, le système de rafraîchissement est intégré à un plancher, à une paroi, à un support et/ou à une assise.

## Revendications

1. Dispositif (100, 200, 600, 700) rafraîchissant éphémère, comportant:
- une structure (104, 605) comportant un support (130, 610) et un pied (140, 615) soutenant le support (130, 610) et
- un système (120, 625, 705) de rafraîchissement de l'air à proximité de la structure comportant une prise (125, 630) de raccordement à une entrée de fourniture en fluide **caractérisé par le fait que** le dispositif (100, 200, 600, 700) comporte :
- une pluralité d'assises (620) positionnées à proximité du pied, chaque assise comportant le système (625) de rafraîchissement de l'air à proximité de la structure et agissant comme échangeur thermique entre le fluide et l'air ambiant, dans lequel au moins une assise (620) entoure au moins partiellement le pied (615),
le dispositif comporte :
- - au moins une conduite (635) de transport du fluide dans au moins deux assises, les conduites (635) de transport d'au moins deux assises étant connectées l'une à l'autre et/ou
- - un connecteur comportant une conduite (635) de transport connectée à une conduite (635) de transport au moins deux assises (620).
dans lequel le pied (615) comporte une conduite (640) de transport de fluide vers le support (610), dans lequel la conduite (640) de transport du pied (615) et la conduite (635) de transport d'au moins deux assises (620) sont reliées, le dispositif comportant un moyen (645) de diffusion du fluide au niveau du support (610) et un débitmètre (650) du fluide diffusé au niveau du support (610), l'actionnement de la prise (630) de fourniture de fluide étant réalisé en fonction du débit de fluide diffusé mesuré par le débitmètre.

2. Dispositif (100, 200) selon la revendication 1, dans lequel la structure (104) délimite un espace intérieur et un espace extérieur, ladite structure comportant une ouverture (106) configurée pour permettre le passage d'un utilisateur entre l'espace intérieur et l'espace extérieur, et dans lequel le système (120) de rafraîchissement comporte un brumisateur (205) du fluide.

3. Dispositif (100) selon la revendication 2, dans lequel le système (120) de rafraîchissement comporte un échangeur (305) thermique entre l'air et du fluide traversant un circuit (310) fermé de circulation du fluide, dans lequel le circuit (310) fermé comporte une pluralité de tronçons (315, 325, 330), chaque tronçon étant fixé à un élément (105, 115) de la structure, deux tronçons étant solidarisés entre eux par une liaison (320) amovible ou non et dans lequel le circuit (310) fermé est intégré à l'intérieur d'au moins un élément (105, 115) de structure, l'échangeur thermique (305) étant formé d'un dit élément de structure.

4. Dispositif (100, 200) selon l'une des revendications 1 à 3, qui comporte un support (130) pour végétaux, dans lequel le support (130) pour végétaux est intégré à la structure (104) et dans lequel les végétaux supportés par le support (130) sont des végétaux dépolluants.

5. Dispositif (100, 200) selon la revendication 4, dans lequel les végétaux sont une mousse.

6. Dispositif (100, 200) selon l'une des revendications 1 à 5, qui comporte un périphérique (405) :
- de transmission de données ou d'énergie électrique ou
- d'affichage d'informations.

7. Dispositif (100, 200) selon la revendication 6, qui comporte un panneau (410) solaire fournissant de l'énergie électrique au périphérique (405).

8. Dispositif (100, 200) selon la revendication 7, qui comporte une colonne (415) comportant le système (120) de rafraîchissement et le panneau (410) solaire, la colonne étant configurée pour être positionnée à l'intérieur de l'espace formé par la structure (104).

9. Dispositif (100, 200) selon la revendication 8, dans lequel la colonne (415) présente une forme tubulaire creuse, ladite colonne comportant une entrée (435) d'aspiration d'air en partie basse, une sortie (440) d'air en partie haute et un ventilateur (445) déplaçant l'air depuis l'entrée d'aspiration vers la sortie d'air, le système de rafraîchissement (120) étant positionné entre l'entrée d'aspiration et la sortie d'air.

10. Dispositif (700) selon l'une des revendications 1 à 9, dans lequel le système (705) de rafraîchissement est un système de rafraîchissement de biens de consommation.

11. Dispositif (100, 200, 600, 700) selon l'une des revendications 1 à 10, dans lequel l'entrée de fourniture en fluide est raccordée à un circuit de transport de froid urbain.

12. Dispositif (100, 200, 600, 700) selon l'une des revendications 1 à 11, dans lequel le système (120, 625, 705) de rafraîchissement est horizontal ou vertical et met en œuvre un rafraichissement par rayonnement et/ou convection et/ou conduction.

13. Dispositif (100, 200, 600, 700) selon l'une des revendications 1 à 12, dans lequel le système (120, 625, 705) de rafraîchissement est intégré à un plancher, à une paroi, à un support et/ou à une assise.

## Patentansprüche

1. Vorrichtung (100, 200, 600, 700) zur vorübergehenden Erfrischung, umfassend:
- eine Struktur (104, 605), umfassend einen Träger (130, 610) und einen Fuß (140, 615), der den Träger (130, 610) stützt, und
- ein System (120, 625, 705) zur Erfrischung der Luft in der Nähe der Struktur, umfassend einen Anschlussstecker (125, 630) an eine Zufuhr für ein Fluid
**gekennzeichnet durch** die Tatsache, dass die Vorrichtung (100, 200, 600, 700) umfasst:
- eine Vielzahl von Sitzen (200), die in der Nähe des Fußes angeordnet sind, wobei jeder Sitz das System (625) zur Erfrischung der Luft in der Nähe der Struktur umfasst und als Wärmetauscher zwischen dem Fluid und der Umgebungsluft wirkt, in dem wenigstens ein Sitz (620) den Fuß (615) wenigstens teilweise umgibt,
die Vorrichtung umfasst:
- - wenigstens eine Transportleitung (635) der Flüssigkeit in wenigstens zwei Sitzen, wobei die Transportleitungen (635) von wenigstens zwei Sitzen aneinander angeschlossen sind und/oder
- - einen Anschlussstecker, umfassend eine Transportleitung (635), die an eine Transportleitung (635) von wenigstens zwei Sitzen (620) angeschlossen ist,
bei der der Fuß (615) eine Transportleitung (640) des Fluids zum Träger (610) umfasst, bei der die Transportleitung (640) des Fußes (615) und die Transportleitung (635) von wenigstens zwei Sitzen (620) verbunden sind, wobei die Vorrichtung ein Verteilermittel (645) des Fluids an dem Träger (610) und einen Durchflussmesser (650) des verteilten Fluids am Träger (610) umfasst, wobei die Betätigung des Anschlusssteckers (630) der Fluidzufuhr in Abhängigkeit von dem von dem Durchflussmesser gemessenen Durchsatz des verteilten Fluids realisiert ist.

2. Vorrichtung (100, 200) gemäß Anspruch 1, bei der die Struktur (104) einen Innenraum und einen Außenraum begrenzt, wobei die genannte Struktur eine Öffnung (106) umfasst, die ausgestaltet ist, um den Durchgang eines Nutzers zwischen dem Innenraum und dem Außenraum zu ermöglichen und bei dem das System (120) zur Erfrischung einen Zerstäuber (205) des Fluids umfasst.

3. Vorrichtung (100) gemäß Anspruch 2, bei der das System (120) zur Erfrischung einen Wärmetauscher (305) zwischen der Luft und dem Fluid umfasst, das einen geschlossenen Kreislauf (310) des Fluids durchquert, bei der der geschlossene Kreislauf (310) eine Vielzahl von Abschnitten (315, 325, 330) umfasst, wobei jeder Abschnitt an einem Element (105, 115) der Struktur befestigt ist, wobei zwei Abschnitte miteinander durch eine abnehmbare Verbindung (320) fest miteinander verbunden sind oder nicht und bei der der geschlossene Kreislauf (310) im Innern wenigstens eines Strukturelements (105, 115) eingebaut ist, wobei der Wärmetauscher (305) aus einem Strukturelement gebildet ist.

4. Vorrichtung (100, 200) gemäß einem der Ansprüche 1 bis 3, die einen Träger (130) für Pflanzen umfasst, bei der der Träger (103) für Pflanzen in die Struktur (104) eingebaut ist und bei der die Pflanzen, die von dem Träger (130) getragen sind, entgiftende Pflanzen sind.

5. Vorrichtung (100, 200) gemäß Anspruch 4, bei der die Pflanzen ein Moos sind.

6. Vorrichtung (100, 200) gemäß einem der Ansprüche 1 bis 5, die ein Peripheriegerät (405) umfasst:
- zur Übertragung von Daten oder elektrischer Energie oder
- zur Anzeige von Informationen.

7. Vorrichtung (100, 200) gemäß Anspruch 6, die ein Solarpaneel (410) umfasst, das die elektrische Energie an das Peripheriegerät (405) liefert.

8. Vorrichtung (100, 200) gemäß Anspruch 7, die eine Säule (415) umfasst, umfassend das System (120) zur Erfrischung und das Solarpaneel (410), wobei die Säule ausgestaltet ist, um im Innern des Raums angeordnet zu sein, der von der Struktur (104) gebildet ist.

9. Vorrichtung (100, 200) gemäß Anspruch 8, bei der die Säule (415) eine hohle Röhrenform aufweist, wobei die genannte Säule einen Eingang (435) zur Luftansaugung im unteren Teil, einen Ausgang (440) der Luft im oberen Teil und einen Ventilator (445) aufweist, der die Luft vom Ansaugeingang zum Luftausgang verschiebt, wobei das System zur Erfrischung (120) zwischen dem Ansaugeingang und dem Luftausgang angeordnet ist.

10. Vorrichtung (700) gemäß einem der Ansprüche 1 bis 9, bei der das System (705) zur Erfrischung ein Erfrischungssystem von Verbrauchsgütern ist.

11. Vorrichtung (100, 200, 600, 700) gemäß einem der Ansprüche 1 bis 10, bei dem die Zufuhr für ein Fluid an einen Transportkreislauf städtischer Kühlung angeschlossen ist.

12. Vorrichtung (100, 200, 600, 700) gemäß einem der Ansprüche 1 bis 11, bei der das System (120, 625, 705) zur Erfrischung horizontal oder vertikal ist und eine Erfrischung per Strahlung und/oder Konvektion und/oder Leitung umsetzt.

13. Vorrichtung (100, 200, 600, 700) gemäß einem der Ansprüche 1 bis 12, bei der das System (120, 625, 705) zur Erfrischung in einen Fußboden, in eine Wand, in einen Träger und/oder in einen Sitz eingebaut ist.

## Claims

1. Temporary cooling device (100, 200, 600, 700), comprising:
- a structure (104, 605) comprising a frame (130, 610) and a base (140, 615) supporting the frame (130, 610); and
- a system (120, 625, 705) for cooling the air nearby the structure, comprising a connector (125, 630) for connecting to an inlet for supplying fluid
**characterized in that** the device (100, 200, 600, 700) comprises:
- a plurality of seats (620) positioned close to the base, each system comprising the system (625) for cooling the air nearby the structure and acting as heat exchanger between the fluid and the ambient air, wherein at least one seat (620) surrounds the base (615) at least partially,
the device comprises:
- - at least one line (635) for transporting the fluid in at least two seats, the transport lines (635) of at least two seats being connected to each other; and/or
- - a connector comprising a transport line (635) connected to a transport line (635) of at least two seats (620),
wherein the base (615) comprises a line (640) for transporting fluid towards the frame (610), wherein the transport line (640) of the base (615) and the transport line (635) of at least two seats (620) are linked, the device comprising a means (645) for diffusing fluid at the location of the frame (610) and a flowmeter (650) for the fluid diffused at the location of the frame (610), the fluid supply connector (630) being activated as a function of the diffused fluid flow rate measured by the flowmeter.

2. Device (100,200) according to claim 1, wherein the structure (104) delimits an interior space and an exterior space, said structure comprising an opening (106) configured to permit a user to pass between the interior space and the exterior space, and wherein the cooling system (120) comprises an atomizer (205) of the fluid.

3. Device (100) according to claim 2, wherein the cooling system (120) comprises a heat exchanger (305) between the air and fluid going through a closed fluid circulation circuit (310), wherein the closed circuit (310) comprises a plurality of sections (315, 325, 330), each section being fixed to an element (105, 115) of the structure, two sections being secured to each other by a connection (320), removable or not, and wherein the closed circuit (310) is incorporated into the interior of at least one structural element (105, 115), the heat exchanger (305) being formed of at least one said structural element.

4. Device (100, 200) according to one of claims 1 to 3, which comprises a support medium (130) for plants, wherein the support medium (130) for plants is incorporated into the structure (104) and wherein the plants supported by the support medium (130) are depolluting plants.

5. Device (100, 200) according to claim 4, wherein the plants are moss.

6. Device (100, 200) according to one of claims 1 to 5, which comprises a peripheral (405):
- for transmitting data or electrical energy, or
- for displaying information.

7. Device (100, 200) according to claim 6, which comprises a solar panel (410) supplying electrical energy to the peripheral (405).

8. Device (100, 200) according to claim 7, which comprises a column (415) comprising the cooling system (120) and the solar panel (410), the column being configured to be positioned inside the space formed by the structure (104).

9. Device (100,200) according to claim 8, wherein the column (415) has a hollow tubular shape, said column comprising a suction inlet (435) for air in the bottom portion, an outlet (440) for air in the upper portion, and a fan (445) moving the air from the suction inlet to the air outlet, the cooling system (120) being positioned between the suction inlet and the air outlet.

10. Device (700) according to one of claims 1 to 9, wherein the cooling system (705) is a system for cooling consumer goods.

11. Device (100, 200, 600, 700) according to one of claims 1 to 10, wherein the fluid supply inlet is connected to an urban cooling circuit.

12. Device (100, 200, 600, 700) according to one of claims 1 to 11, wherein the cooling system (120, 625, 705) is horizontal or vertical, and utilizes radiative and/or convection and/or conduction cooling.

13. Device (100, 200, 600, 700) according to one of claims 1 to 12, wherein the cooling system (120, 625, 705) is incorporated into a floor, a wall, a frame and/or a seat.
